# EUROPÄISCHE PATENTSCHRIFT

(11) **EP 2 321 439 B1**
(45) Veröffentlichungstag und Bekanntmachung des Hinweises auf die Patenterteilung: **22.03.2017**
(21) Anmeldenummer: 09775611.8
(22) Anmeldetag: 25.08.2009
(51) Int. Cl.: C22B 5/10, C22B 7/00, C22B 7/02, C22B 7/04, C21C 5/54

(54) **VERFAHREN ZUM AUFARBEITEN VON FESTEN ODER SCHMELZFLÜSSIGEN STOFFEN**
METHOD FOR PROCESSING SOLID OR MOLTEN MATERIALS
PROCÉDÉ DE TRAITEMENT DE MATIÈRES SOLIDES OU DE MATIÈRES LIQUIDES À L ÉTAT FONDU

(30) Priorität: 27.08.2008 AT 13292008
(43) Veröffentlichungstag der Anmeldung: 18.05.2011
(73) Patentinhaber: SGL Carbon SE, 65201 Wiesbaden (DE)
(72) Erfinder: EDLINGER, Alfred, 6780 Bartholomäberg (AT)
(86) Internationale Anmeldenummer: PCT/AT2009/000329
(87) Internationale Veröffentlichungsnummer: WO 2010/022425

(56) Entgegenhaltungen:
- WO-A-2006/079132
- JP-A- 5 074 558
- JP-A- 2001 310 177
- JP-A- 2007 204 782

## Beschreibung

Die Erfindung bezieht sich auf ein Verfahren zum Aufarbeiten bzw. Reduzieren von festen oder schmelzflüssigen Stoffen, insbesondere von Shredderleichtfraktionen, geshredderten Altreifen, ölhaltigem Walzwerkzunder, PCB (polychlorierten Biphenylen), kontaminiertem Altholz, kontaminiertem Aushubmaterial (Dioxine oder Furane), Erdöl-Destillationsrückständen und Trocken-Klärschlamm.

Stäube und Schlacken, insbesondere Müllschlacken, ShredderLeichtfraktion, Verbundmaterialien wie beispielsweise beschichtete Aluminiumfolien, Stahlschlacken sowie Schlacken aus der Nichteisenmetallurgie und anorganischen Technologie, enthalten eine Reihe von Metalloxiden, wobei im Fall von Stahlschlacken erhebliche Mengen an Schwermetalloxiden in der Schlacke vorliegen. Zur Reduktion derartiger unerwünschter Metalloxide, und insbesondere der Oxide von Chrom, Vanadium, Molybdän, Wolfram, Kobalt, Mangan, Blei, Kupfer und Zink, wurde bereits vorgeschlagen, flüssige Schmelze auf ein entsprechendes reduzierendes Metallbad, und insbesondere ein Eisenbad, welches gelösten Kohlenstoff als Reduktionsmittel enthält, aufzubringen, wobei die reduzierten Metalle in den Metallregulus übergehen. Für die wirtschaftliche Durchführung eines derartigen Verfahrens ist es aber zumeist erforderlich, die Ausgangsmaterialien unmittelbar als Schmelze einzusetzen, um die fühlbare Wärme der Schmelze nützen zu können. Des weiteren befindet sich bei allen derartigen Redoxreaktionen die Schlacke mit dem Metallbad im Gleichgewicht und auf Grund der Gleichgewichtsbedingungen lassen sich Schwermetalloxide nie in einer Weise vollständig reduzieren, bei welcher die in der Schlacke verbleibenden Oxide unter der analytischen Nachweisgrenze wären. Dies gilt insbesondere für Chrom- und Vanadiumoxide, welche in der reduzierten Schlacke in Mengen von zumeist über 1000 ppm verbleiben.

Gläser, und insbesondere Glasschmelzen, können nur dann farblos hergestellt werden, wenn aus derartigen Glasschmelzen auch überaus geringe Spuren von Schwermetalloxiden quantitativ entfernt werden, da die Metalloxide dem Glas entsprechende Farben verleihen. Bei der Aufarbeitung von Glas bzw. Glasschmelzen ist weiters in aller Regel ein Läutern erforderlich, um feinste Gasblasen, wie sie auch bei Reduktionsprozessen zur Elimination von Metalloxiden entstehen, sicher zu entfernen. Dies gelingt nur bei entsprechend hohen Temperaturen und entsprechend niedrig viskosen Schmelzen sowie bei relativ niedrigen Badspiegeln, welche einen Austritt der Gase noch ermöglichen.

In diesem Zusammenhang wurde in der WO 2006/079132 A1 bereits vorgeschlagen, feste Partikel und/oder Schmelzen auf ein zumindest teilweise induktiv erhitztes Bett oder eine Säule mit stückigem Koks aufzugeben und die ablaufende reduzierte und/oder entgaste Schmelze zu sammeln. Ein derartiges Koksbett hat gegenüber den bekannten Metallbädern ein wesentlich höheres Reduktionspotential, wobei sowohl das Schmelzen als auch das Reduzieren direkt im Koksbett bzw. direkt an den Koksstücken erfolgte. Nachteilig bei diesem Verfahren war allerdings, dass das Koksbett einen relativ hohen Schwefelgehalt aufwies und nur bei sehr hohen Induktionsfrequenzen ankoppelte und somit ein relativ hoher Aufwand hinsichtlich der elektrischen Ausrüstung betrieben werden musste. Die entsprechenden Frequenzen lagen bei etwa 50 bis 100 kHz, was wiederum dazu führte, dass die aufgewendete Energie aufgrund des Skin-Effektes nur am äußeren Rand des Koksbettes eingebracht werden konnte. Um das Koksbett auch in der Mitte der Schüttung ausreichend zu erhitzen, waren hohe Leistungen erforderlich, da eine Wärmeleitung durch den Koks von der induktiv beheizten Randzone zur Mitte hin nur in sehr geringem Ausmaß stattfindet. Das bekannte Verfahren hatte darüber hinaus den Nachteil, dass der Koks im Zuge der Reduktionsreaktionen sukzessive verbraucht wurde und deshalb kontinuierlich nachgefüllt werden musste, wozu relativ aufwändige apparative Vorkehrungen getroffen werden mussten. Problematisch war hier insbesondere, dass bei einer Aufgabe von kaltem Koks auf die glühende Schüttung der Koks zu feinstem Staub zerfiel, sodass eine ausreichende Porosität der Schüttung nicht mehr gegeben war und hohe Druckverluste in Kauf genommen werden mussten.

Aus der JP 2001-310,177 A ist ein Schmelzofen bekannt, bei dem Abfälle mit einem induktiv erhitzten Graphit in Kontakt gebracht werden.

In der JP 2007-204,782 A wird ein Verfahren zum Wiederverwerten einer Stahlschlacke beschrieben, bei dem diese zunächst in magnetisches und nichtmagnetisches Material aufgetrennt wird, wobei das nichtmagnetische Material mit einem Reduktionsmittel vermischt und einer Wärmebehandlung unterworfen wird.

In der WO 2006/079132 A wird ein Verfahren zum Reduzieren von metalloxidhaltigen Schlacken offenbart, bei dem die Ausgangsstoffe auf ein induktiv erhitztes Bett bzw. eine Säule mit stückigem Koks aufgegeben und reduziert werden.

Ein Induktionsofen wird ebenfalls in der JP 05-074,558 A offenbart.

Die Erfindung zielt nun darauf ab, ein Verfahren der eingangs genannten Art dahingehend zu verbessern, dass unter Vermeidung der oben genannten Nachteile in besonders einfacher und wirtschaftlicher Weise nicht nur Festsubstanzen sondern auch Schmelzen weitestgehend quantitativ von Schwermetalloxiden befreit werden können, und insbesondere eine Reihe von Schwermetalloxiden bis unter die Nachweisgrenzen eliminiert werden können, wobei gleichzeitig sichergestellt werden soll, dass die aufgegebenen oder im Zuge des Verfahrens gebildeten Schmelzen vollständig entgast bzw. geläutert werden. Insbesondere sollen Problemstoffe wie Shredderleichtfraktionen in einfacher Weise aufgearbeitet werden können.

Erfindungsgemäß wird diese Aufgabe gelöst durch die Bereitstellung eines Verfahrens zum Aufarbeiten bzw. Reduzieren von festen oder schmelzflüssigen Stoffen und/oder Pyrophoren, wobei die festen oder schmelzflüssigen Stoffe auf einen zumindest teilweise induktiv erhitzten Graphitkörper aufgegeben werden, vom Kohlenstoff des Graphits verschiedene Reduktionsmittel eingebracht werden und die ablaufende reduzierte und/oder entgaste Schmelze gesammelt wird, wobei die Reduktionsmittel gemeinsam mit den festen oder schmelzflüssigen Einsatzstoffen eingebracht werden, dadurch gekennzeichnet dass als Reduktionsmittel Erdgas, Braunkohlestaub, Kohlenwasserstoffe, Wasserstoff, Kohlenmonoxid und/oder Ammoniak, gemeinsam mit Wasserdampf, Sauerstoff, CO₂ und/oder Halogenen bzw. Halogenwasserstoffen eingebracht werden, und, dass die festen oder schmelzflüssigen Stoffe und die vom Kohlenstoff des Graphits verschiedenen Reduktionsmittel in das Graphitbett eingesaugt werden.

Dadurch, dass die Reduktionsmittel nicht mehr von der induktiv beheizten Schüttung selbst gebildet, sondern eingebracht werden und insbesondere gemeinsam mit den festen oder schmelzflüssigen Einsatzstoffen bzw. als feste oder schmelzflüssige Einsatzstoffe, eingebracht werden, wird der induktiv beheizte Graphitkörper nicht oder nur in unwesentlichem Ausmaß verbraucht, wodurch auf aufwändige Vorrichtungen zum Nachfüllen des Graphits gänzlich verzichtet werden kann. Dadurch, dass die Graphitschüttung im Wesentlichen nicht verbraucht wird, wird es möglich, sowohl axiale als auch radiale Gradienten der Graphitparameter in der Schüttung einzustellen. Beispielsweise können zur Optimierung der Temperatur- und Strömungsverhältnisse die Größe, die Form, der Kristallgehalt sowie der elektrische Leitwert der einzelnen Graphitkörper lokal beeinflusst werden, um die entsprechenden Effekte zu erzielen. Als Edukte sollen hierbei neben den bereits genannten auch oxidierter, thermisch vorbehandelter Stahlwerksstaub zum Einsatz gelangen. Blei, Halogene und Alkalien werden bei der thermischen Vorbehandlung außerhalb des Reaktors ausgetrieben, wodurch aus dem Abgas des erfindungsgemäßen Verfahrens sehr reines Zink, ggf. in Form des Oxids, gewonnen werden.

Das Reduktionsmittel kann als Komponente der festen oder schmelzflüssigen Einsatzstoffe oder von den Einsatzstoffen gesondert eingebracht werden.

Die Shredderleichtfraktion wird auf den Graphit aufgegeben und vergast bei ca. 1500-2000°C. Aufgrund der hohen Temperaturen und der reduzierenden Atmosphäre können Dioxine, Furane und PCB's sofort gespalten werden. Ebenso kann Teer vergast werden. Der erzeugte Pyrolyse-Koks wird durch Addition von Wasserdampf und/oder Sauerstoff vergast. Möglicherweise enthaltener Schwefel wird als Kalziumsulfid in der entsprechend eingestellten Schlacke gelöst. Metall- und Schlackenkomponenten werden verflüssigt und können getrennt abgestochen werden. Das erzeugte kontaminierte Gas wird zur Abgasbehandlung abgesaugt und dort gereinigt. Durch den eingespritzten Wasserdampf und dem Sauerstoff als Gasifizierungsmittel wird das gereinigte Gas nicht durch Luft verdünnt und ist daher frei von Stickoxiden (NOx). Das Gas findet bevorzugt Verwendung als Reduktionsgas im Hochofen oder bei der Direktreduktion, als alternatives Brenngas im Zementklinkerofen, für diverse metallurgische (Vorwärm-) Öfen, für die Direktverstromung (bspw. im Gasmotor) oder für die Fischer-Tropsch-Synthese auf Grund des hohen H₂-Gehalts.

Da die festen Partikel und/oder die Schmelzen auf einen induktiv beheizten Graphitkörper aufgegeben und Reduktionsmittel eingebracht werden, gelingt es, die für die Reduktion notwendige thermische Energie unabhängig von der stattfindenden Reduktionsreaktion bereitzustellen. Der Graphitkörper ist hierbei von einem Bett gebildet. Alternativ kann der Graphitkörper als Graphitblock mit diesen durchsetzenden Kanälen oder Bohrungen ausgebildet sein. Gemeinsam ist diesen Ausbildungen, dass zwischen den Graphitstücken des Betts, der Säule oder der Schüttung bzw. in den Kanälen oder Bohrungen des Graphitblocks Freiräume verbleiben, in denen die Reduktionsreaktion vorwiegend in der Gasphase stattfindet. Die Reduktion kann in diesen Freiräumen des Graphitkörpers innerhalb kürzester Zeit stattfinden, wobei dort auch die Schmelzeagglomeration aufgrund hoher Turbulenz- und Oberflächenkräfte erfolgt. Als Reaktionsmechanismen sind hierbei sowohl die indirekte Reduktion von Metalloxid mit Kohlenmonoxid zu Metall und Kohlendioxid bzw. mit Wasserstoff zu Metall und Wasser als auch die direkte Reduktion von Metalloxid mit Kohlenstoff zu Metall und Kohlenmonoxid denkbar. Kohlendioxid wird wiederum mit reaktivem Kohlenstoff zu Kohlenmonoxid umgewandelt und entstehendes Wasser reagiert über die Wassergasreaktion mit Kohlenstoff zu Wasserstoff und Kohlenmonoxid.

Dadurch, dass das erfindungsgemäße Verfahren die Trennung der Bereitstellung der notwendigen thermischen Energie und der Bereitstellung der Reduktionsmittel ermöglicht, kann eine Vielzahl von verschiedenen Reduktionsmitteln zum Einsatz gelangen, wobei das tatsächlich verwendete Reduktionsmittel nach den Anforderungen der Reduktion und wirtschaftlichen Gesichtspunkten gewählt werden kann.

Graphit, welcher elektrisch sehr gut leitend ist, koppelt bereits bei wesentlich geringeren Induktionsfrequenzen und insbesondere bereits bei Frequenzen von über 0,5 kHz an, sodass die oben genannten Nachteile hinsichtlich der elektrischen Anlagen vermieden werden können. Die elektrische Leitfähigkeit von Graphit nimmt mit steigender Temperatur ab. Dadurch, dass aber geringere Induktionsfrequenzen bereits zu einem Ankoppeln des Graphits führen, wird ein ausgeprägter Skin-Effekt vermieden, sodass die aufgewendete Energie tiefer in den Querschnitt des Graphitkörpers eindringen kann und somit zu einer gleichmäßigeren induktiven Erhitzung führt. Die Induktionsfrequenz ist hierbei aber weitgehend frei wählbar, sodass es auch denkbar ist, höhere Frequenzen zu wählen, um bewusst einen stärkeren Skin-Effekt zu erzielen. Dies kann hilfreich sein, wenn die Randzone so weit erhitzt wird, dass aufgrund der hohen Viskosität der Gase in der überhitzten Randzone der Großteil der Reaktionsgase zur Mitte des Reaktors hin fokussiert wird, wobei das Feuerfestmaterial des Reaktors durch die viskositätsbedingte Minimierung des Stoffaustauschs in der Randzone geschützt wird. Gleichzeitig ist die Wärmeleitfähigkeit von Graphit um ein vielfaches höher als jene von Koks, sodass zusätzlich zu der gleichmäßigeren induktiven Erhitzung ein Temperaturausgleich durch Wärmeleitung über den gesamten Querschnitt des Graphitkörpers erfolgt.

Erfindungsgemäß werden die festen oder schmelzflüssigen Stoffe und die vom Kohlenstoff des Graphits verschiedenen Reduktionsmittel sowie ggf. die festen oder schmelzflüssigen Einsatzstoffe in das Graphitbett eingesaugt. Dies kann dadurch bewerkstelligt werden, dass über die axiale Länge der Graphitschüttung ein Druckgradient eingestellt wird, der die Partikel und Gase vom Aufgabeende der Schüttung zum Abstichende strömen lässt. Auf diese Weise wird eine sichere Anwendung des erfindungsgemäßen Verfahrens ermöglicht.

Wenn, wie es einer bevorzugten Ausführungsform der vorliegenden Erfindung entspricht, als Reduktionsmittel Kohlestaub bzw. Braunkohlestaub eingebracht wird, kann ein gegenüber einem Koksbett (siehe WO 2006/079132 A1) um ein vielfach höheres Reduktionspotential erreicht werden. Der Kohlestaub wird beim Auftreffen bzw. beim Eindringen in die Freiräume des induktiv beheizten Graphitkörpers gemeinsam mit dem ebenfalls eingebrachten Sauerstoff/Wasserdampf augenblicklich zu Kohlenmonoxid und Wasserstoff umgewandelt, wodurch eine sehr effiziente Reduktion der Edukte gewährleistet wird. Ein weiterer Vorteil liegt darin, dass Kohlestaub wesentlich billiger ist als Koks. Braunkohlestaub, welcher überaus kostengünstig verfügbar ist, eignet sich in besonderem Maße für die Durchführung des erfindungsgemäßen Verfahrens. Dies zum Einen, da der im Vergleich zum sehr reinen Kohlestaub relativ stark mit Begleitsubstanzen belastete Braunkohlestaub bei der Pyrolyse zu einer Vielzahl an volatilisierten Substanzen führt, welche ein hohes Reduktionspotential besitzen und zum anderen, da der relativ hohe Schwefelanteil im Braunkohlestaub zur Gänze in die Schlackenfraktion übergeht und somit Probleme und Kosten der Abgasentschwefelung bei dieser Art der Nutzung von Braunkohle gänzlich vermieden werden.

Das Verfahren ist in bevorzugter Weise hierbei dahingehend weitergebildet, dass feste Reduktionsmittel mithilfe eines Trägergases und insbesondere Stickstoff, CO₂, O₂ oder Luft eingebracht werden. Dies sorgt einerseits für eine homogene Verteilung der zu reduzierenden bzw. zu schmelzenden Materialien auf der Oberfläche der Schüttung und vermeidet andererseits die Bildung größerer Mengen an Produktgas, wodurch ein übermäßiges Mitreißen von Partikeln aus der Schüttung vermieden wird und der Druckverlust der Schüttung begrenzt bleibt.

Gemäß einer bevorzugten Verfahrensweise können in den erfindungsgemäß vorgesehenen induktiv erhitzten Graphitkörper, insbesondere in das Bett oder die Schüttung mit stückigem Graphit, Gase eingeblasen werden, wodurch das Redoxpotential des Graphitkörpers innerhalb weiter Grenzen geregelt werden kann. Beispielsweise kann das Redoxpotential entsprechend abgestumpft werden und eine Verfahrensführung möglich werden, bei welcher nur edlere Metalle aus ihren Metalloxiden reduziert werden, wohingegen unedlere Metalle in der Schmelze verbleiben. Gleichzeitig kann mit einer derartigen Gaszufuhr neben einer Einstellung des Redoxpotentials auch eine Temperaturveränderung erzielt werden, um auf diese Weise in entsprechenden Bereichen des Graphitkörpers volatilisierende Stoffe wiederum zu kondensieren. Die Temperatur des Graphitkörpers kann in besonders einfacher Weise durch Veränderung der aufgenommenen elektrischen Leistung bei der induktiven Erhitzung geregelt werden, sodass mit einem einfachen und relativ klein bauenden Reaktor eine vollständige Verfahrenskontrolle möglich wird, mit welcher einer Unzahl von verschiedenen Parametern Rechnung getragen werden kann. Bei entsprechend hohen Temperaturen gelingt es in besonders einfacher Weise, auch die Oxide von Chrom und Vanadium zu reduzieren.

Die Einsatzstoffe können bevorzugt unmittelbar auf den glühenden Graphitkörper aufgegeben werden, wodurch im Zuge des erfindungsgemäßen Verfahrens bei entsprechend höheren Temperaturen auf Grund der relativ dünnen Schicht beispielsweise ein rasches Entgasen bzw. Läutern von Glasschmelzen erzielt wird. Insgesamt lassen sich mit einem induktiv erhitzten Bett mit stückigem Graphit ohne weiteres Temperaturen von 2000° C und darüber erzielen. Der Einsatz von stückigem Material dient hierbei in erster Linie dazu, die gewünschte Permeabilität für Gas und flüssige Schmelzen sicherzustellen.

Gemäß einer bevorzugten Ausführungsform der vorliegenden Erfindung ist das Verfahren dahingehend weitergebildet, dass Graphit in Form von Kugeln, Zylindern, Blöcken, pelletierten Presskörpern und/oder Elektrodenbruch verwendet wird. Durch geeignete Wahl der geometrischen Form, in welcher der Graphit in der Schüttung vorliegt, kann die Schüttungsdichte und somit der zu erwartende Druckverlust durch die Schüttung den Erfordernissen angepasst werden. Besonders kostengünstig und in geometrisch sehr geeigneter Form kann Graphit in Form von gebrauchten Elektroden und gebrauchten Graphit-Kathoden der AL-Elektrolyse (=SPL -> Spent Potliner) aus der E-Stahlherstellung verwendet werden. SPL haben bis zu 15% Alkalien und bis zu 1% CN (Cyanid), sind gebrauchte Graphit-Elektroden aus der AL-Primärherstellung und stellen weltweit ein riesiges Entsorgungsproblem dar. Bei Einsatz von SPL wird das Cyanid bei einer T>900°C zerstört (HCN→H₂+C+N₂) und die Alkalien gehen in die sich bildende Produktschlacke über. Bei einem Einsatz von Wasserdampf geht das NaCN aus dem SPL nach folgender Formel in das Na₂O der Schlacke über:

NaCN + H₂O → Na₂O + HCN

Die Größe der Graphitkörper liegt hierbei im Bereich von ungefähr 5 mm bis zu ungefähr 5 cm Durchmesser.

Die Graphitkörper können mit Vorteil aber auch aus einem Gemisch aus Graphit und Katalysatorpulver gebildet sein, welches gepresst und ggf. gesintert wurde, um der Schüttung spezielle katalytische Eigenschaften zu verleihen und sie den jeweils geeignet erscheinenden chemischen und physikalischen Prozessanforderungen anzupassen. In diesem Zusammenhang ist es gemäß einer bevorzugten Ausführungsform der vorliegenden Erfindung auch denkbar, die Graphitkörper zur Einstellung der elektrischen Leitfähigkeit mit geeigneten Salzen und/oder Metallen oder Keramik zu verpressen.

Um die Strömungseigenschaften des Graphitbetts optimal einzustellen, ist das erfindungsgemäße Verfahren mit Vorteil dahingehend weitergebildet, dass die Graphitkörper hinsichtlich ihrer Mikroporosität kontrolliert ausgebildet werden. Das erfindungsgemäße Verfahren wird in bevorzugter Weise derart durchgeführt, dass die induktive Beheizung unter Anlegen von Strom mit zwei unterschiedlichen Frequenzen vorgenommen wird, wobei eine niedrige und eine hohe Frequenz gewählt wird. Die hohe Frequenz ist bevorzugt in einem Bereich von 3 bis 15 kHz und dient der induktive Heizung des Graphits. Die niedrige Frequenz ist bevorzugt in einem Bereich von unter 0,5 kHz und erzeugt eine Lorenz Kraft auf die Graphitkörper, wodurch diese in Bewegung geraten. Dadurch wird das heiße, reduzierte Aufgabegut durch den elektrodynamischen Impuls auf die Graphitkörper von diesen durchgerührt. Durch diese Rührwirkung werden Reaktionen durch den Stoff-/Wärmeaustausch signifikant beschleunigt.

Zur Verhinderung von Strombrücken bei aneinander anliegenden Graphitstücken und einem damit einhergehenden Heizverlust wird das Verfahren bevorzugt derart durchgeführt, dass der Graphitkörper als Schüttung eines Gemisches aus Koks und inerten Füllkörpern, insbesondere katalytisch wirksamen CaO- oder MgO-Körpern, eingebracht wird. Die inerten Füllkörper verhindern größtenteils den direkten Kontakt zwischen einzelnen Koksstücken, wodurch jedes Koksstück eine eigene Heizzelle ausbildet.

In bevorzugter Weise wird das erfindungsgemäße Verfahren so durchgeführt, dass gemeinsam mit den Aufgabestoffen Zn-haltige Stahlwerksstäube zur Abbindung von S aufgegeben werden (ZnO+H₂S→ZnS+H₂O).

Die Vorrichtung zum Aufarbeiten bzw. Reduzieren von festen oder schmelzflüssigen Stoffen, insbesondere von Shredderleichtfraktionen, ist mit einer Aufgabeöffnung für das feste oder schmelzflüssige Material und einer Abstichöffnung für die behandelte Schmelze ausgestattet. Eine derartige Vorrichtung ist im Wesentlichen gekennzeichnet durch ein rohr- oder rinnenförmiges Gehäuse enthaltend einen Graphitkörper und eine das Gehäuse umgebende, wenigstens eine Induktionsspule umfassende Heizeinrichtung zum induktiven Beheizen des Graphitkörpers. Zur Einstellung des Redoxpotentials bzw. zur bereichsweisen Kühlung ist die Ausbildung bevorzugt so getroffen, dass an das Gehäuse Rohrleitungen für die Zufuhr von Gasen angeschlossen sind. In besonders einfacher Weise kann die Ausbildung so getroffen sein, dass das rohrförmige Gehäuse aus elektrisch isolierendem Material, wie z.B. Al₂O₃ oder MgO, oder von wenigstens einer elektrisch isolierenden Folie oder Matte gebildet ist und von einer gekühlten Induktionsspule umgriffen ist. Eine derartige elektrisch isolierende Folie kann beispielsweise von hochtemperaturbeständigen Chrom-Korund-Matten gebildet werden, wobei zu Beginn der mechanische Halt durch die in der Regel wassergekühlte Induktionsspule erzielt wird. Bei der Aufgabe von schmelzflüssigem Material oder bei der Ausbildung von Schmelzen wird die elektrisch isolierende Folie rasch mit einem Schlacken- oder Schmelzenpelz überzogen, da ja die Induktionsspule entsprechend gekühlt ist, wodurch die mechanische Stabilität der Säule wesentlich verbessert wird und gleichzeitig Probleme mit Feuerfestmaterial zur Gänze eliminiert werden. Ebenso ist aber auch denkbar, die Induktionskörper in die Feuerfestmasse einzugießen sodass die Induktionskörper auch mechanische Eigenschaften übernehmen können. Die Feuerfestmasse kann hierbei aus Magnesit, Spinel oder Korund sowie aus Feuerfestbeton bestehen.

Um die Temperatur des Graphitbettes abschnittsweise in einfacher Weise verändern zu können, ist die Ausbildung mit Vorteil so getroffen, dass die Induktionsspule in Achsrichtung des rohrförmigen Gehäuses in mehrere Abschnitte unterteilt ausgebildet ist, wobei bevorzugt für axial aufeinander folgende Abschnitte des rohrförmigen Gehäuses gesonderte Temperaturmesseinrichtungen und/oder Messeinrichtungen für die elektrische Leistungsaufnahme vorgesehen sind und die Temperatur und das Redox-Regime in gesonderten Abschnitten durch Einstellung der elektrischen Leistung und/oder der einzublasenden Gase und/oder Gasvolumina regelbar ist.

Die Vorrichtung ist derart ausgebildet, dass axial an die im Bereich der Heizeinrichtung liegende Reduktionszone eine Beruhigungszone anschließt. In dieser Zone werden die Reaktionsprodukte, welche in der Reaktionszone anfallen, durchmischt und Schmelze-Tröpfchen agglomeriert, sodass ein homogenes Produktgas anfällt. Die Beruhigungszone ist hierbei in bevorzugter Weise so dimensioniert, dass die axiale Länge der Beruhigungszone dem ein- bis zweifachen der lichten Weite des rohrförmigen Gehäuses entspricht, wodurch eine ausreichende Durchmischung der Gase erreicht wird und gleichzeitig in der Gasphase vorhandene, noch feste Partikel in die Schmelze überführt werden können. Zur Absenkung der Strömungsgeschwindigkeit wird bevorzugt der Durchmesser des Reaktors in diesem Bereich angepasst.

Die Erfindung wird nachfolgend anhand von in der Zeichnung schematisch dargestellten Ausführungsbeispielen der Vorrichtung näher erläutert. In dieser zeigt Fig. 1 eine Ausbildung eines Reaktors für die Aufnahme einer Graphitshüttung zur Durchführung des Verfahrens gemäß der vorliegenden Erfindung, Fig.2 eine weitere Ausbildung eines Reaktors, Fig.3 ein Verfahrensschema, welches die Integration des erfindungsgemäßen Verfahrens in eine industrielle Anwendung illustriert, Fig.4 eine bevorzugte Ausbildung der Aufgabevorrichtung und Fig. 5 eine bevorzugte Ausführungsform der Vorrichtung zur Aufgabe großer Eduktstaubmengen.

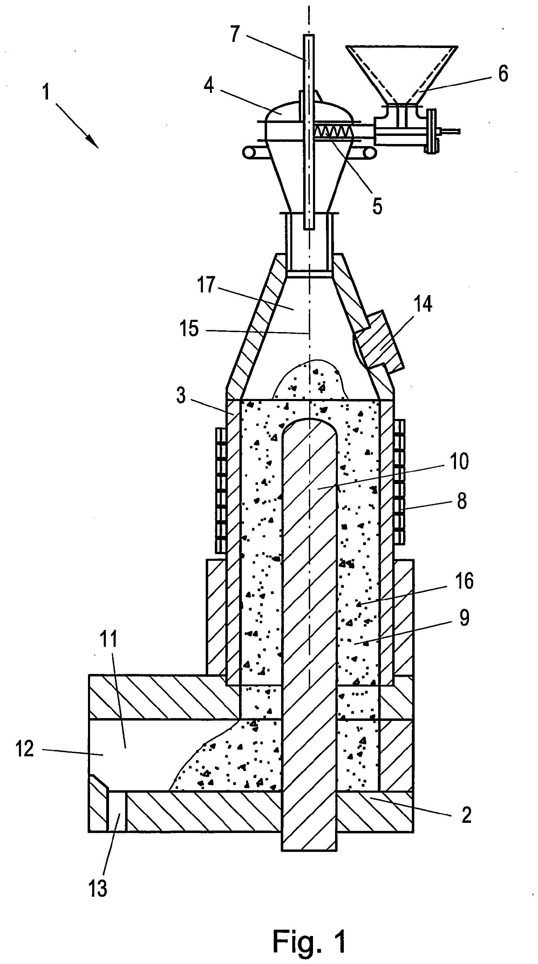

In Fig. 1 ist mit 1 ein Reaktor mit einer Graphitschüttung. 16 gezeigt, der einen Sockel 2 und ein Gehäuse 3 umfasst. Das Gehäuse 3 läuft im oberen, dem Aufgabeende für feste Partikel oder Schmelzen benachbarten Bereich konisch zu und bildet dabei einen Diffusor für die eingebrachten Chargen aus und trägt eine Aufgabeeinrichtung für Stäube, Schlacken, Schmelzen und/oder Schlämme bzw. für metalloxidische Gläser, wobei die Aufgabeeinrichtung in diesem Fall im Wesentlichen von einem Dosierzyklon 4 gebildet wird, dem die zu reduzierenden bzw. zu entgasenden Materialien über einen Schneckenförderer 5 zugeführt werden, wobei die zu reduzierenden Materialien, ggf. vermischt mit dem Reduktionsmittel sowie ggf. Additiven wie z.B. SiO₂, in einem Aufgabetrichter 6 vorrätig gehalten werden. Der Dosierzyklon wird hierbei mit einem Inertgas, wie Stickstoff, betrieben, wobei zusätzlich eine in axialer Richtung verstellbare Lanze 7 zum Einbringen von Kohlestaub vorgesehen sein kann. Ein derartiger Dosierzyklon ist beispielsweise in der WO 03/070651 beschrieben. Das Gehäuse 3 ist in einem axialen Bereich von einer Induktionsspule 8 umgeben, über welche die Graphitschüttung 16 induktiv beheizt werden kann. An den die Induktionsspule 8 aufweisenden Bereich des Gehäuses 3 schließt eine Beruhigungszone 9 an, in welcher keine thermische Energie eingebracht wird, und die somit als Beruhigungs- und Durchmischungszone nach der Reaktion dient. Mit 10 ist ein Verdrängerkörper bezeichnet, der im einfachsten Fall dazu dient, den möglicherweise schwer zu beheizenden Kernbereich von Graphit freizuhalten und der der Optimierung der Strömungsführung dienen kann. Gleichzeitig ist es denkbar, über den Verdrängerkörper zusätzliche Gase einzubringen oder den Verdrängerkörper mit weiteren Induktionskörpern zu versehen.

In der Kammer 11 findet eine Trennung der Reaktionsgase von der Metallschmelze statt, wobei die Gase über die Öffnung 12 abgezogen werden können und die Schmelze durch den Abstich 13 abläuft. Mit 14 ist eine Öffnung bezeichnet, durch welche die Graphitschüttung 16 durch die Zugabe von beispielsweise Graphitkugeln bzw. Elektrodenbruch erneuert werden kann. Über die axiale Länge, d.h. in Längsrichtung der Achse 15 des Reaktors, kann durch die Zufuhr von Gasen und durch die Temperaturregelung sowohl ein Redoxgradient als auch ein Temperaturgradient eingestellt werden, sodass sichergestellt werden kann, dass im Bereich des Abstiches 13 ein eisenoxid- und schwermetalloxidfreier Schlacken- und Metallabstich gelingt, sodass auch an dieser Stelle Feuerfestprobleme nicht mehr auftreten.

Die Wand des Gehäuses 3 des Reaktors 1 kann von einfachen Feuerfestfolien gebildet sein, welche im Zuge des Aufschmelzens bzw. Herabfließens der Schmelze mit Schmelze benetzt werden, die einen entsprechenden Schlacken- bzw. Schmelzenpelz ausbildet. Die Spule 8 ist als wassergekühlter Kupferleiter ausgebildet und stellt eine entsprechende Kühlung der Wand und damit die Ausbildung des Schlacken- bzw. Schmelzepelzbelages sicher.

Zwischen der Aufgabeeinrichtung 4 und dem Graphitkörper 16 kann eine Vorverbrennungs- oder Vorwärmungszone 17 angeordnet sein, in welche wenigstens eine Leitung (nicht dargestellt) zum Einbringen eines Energieträgers und/oder eines oxidativen Gases für die Vorverbrennung- bzw. Vorwärmung münden kann.

Eine Nachverbrennung am Aufgabeende/Abstichende und in der Graphitschüttung, bei welcher CO zu CO₂ verbrannt wird, ist prinzipiell möglich und führt zu einer Effizienzsteigerung durch fossilen Wärmeeintrag. Die ohnedies sehr inerte Graphitschüttungsoberfläche ist hierbei durch die Schlackenschmelze teilweise abgedeckt, sodass die Boudouard-Reaktion mit dem Graphitkohlenstoff weitestgehend unterdrückt wird.

Die in der Graphitschüttung ausgebildete Metallschmelze kann darüber hinaus durch den Kohlestaub aufgekohlt werden bzw. bildet im Metallbad dispergierte Carbide, wie z.B. Carbide der Metalle Eisen, Vanadium, Chrom oder Wolfram, aus. Prinzipiell gelingt es, Chrom auch mit relativ kurzen Gaphitschüttungen auf unter 60 ppm aus Schlacken heraus zu reduzieren. Insbesondere bei "Drittelschlacke", welche im "Elektroschlacke-Umschmelzverfahren" zur Herstellung von hochwertigen Bau- und Werkzeugstählen Verwendung findet, ist die Reinheit der Schlacke von höchster Bedeutung. Die Schlacke besteht im Wesentlichen zu je einem (Gew.) Drittel aus CaF₂ (Fluss-Spat), CaO (Branntkalk) und Al₂O₃ (Korund), sowie in manchen Fällen aus MgO, SiO2 und ähnlichen. Zur Herstellung dieser Schlacken ist das erfindungsgemäße Verfahren besonders geeignet, da Verunreinigungen von H,P,S,N₂,C,Pb,Bi, CN, Na, K und B besonders effizient entfernt werden können. Gegenwärtig wird diese Schlacke durch Schmelzen ultrareiner Ausgangsstoffe im Elektrolichtbogen hergestellt. Aufgrund der im Lichtbogen vorherrschenden sehr hohen Temperaturen (ca. 8000°C, Plasma) und des Elektrodenmaterials (Graphit) findet jedoch eine sehr unvorteilhafte Aufkohlung und Carbidbildung von Ca und Al sowie teilweise auch eine Aufschwefelung durch Graphitelektroden-Restschwefel statt. Ebenfalls löst sich in dieser Schlacke der Stickstoff der Luft. Allfällige weitere Verunreinigungen verbleiben in der erzeugten Schlacke.

Das erfindungsgemäße Verfahren bietet demgegenüber eine Reihe von Vorteilen:
- wesentlich niedrigere Temperaturen, gleichmässig verteiltes, gut einstellbares Temperaturniveau, keine Temperaturspitzen (induktiv beheiztes Graphitkörperbett)
- Reduktion mit teilweiser Verflüchtigung unerwünschter Elemente durch Zugabe von ultrareinen "Carbon Blackes", daher wesentlich günstigere Rohmaterialsituation
- Möglichkeit der "Regeneration" von gebrauchter Drittelschlacke durch die erfindungsgemäße Reduktion, Verhinderung extrem teurer Sondermülldeponie und Rückgewinnung wertvollster Legierungskomponenten wie Ni,Cr,V,W,Mo,Ta und ähnlichen
- keinerlei Brückenbildung des Aufgabegutes im Reaktor, da dieses in das Graphitbett eingesaugt wird; (dies ist ein großes Problem bei der Herstellung im E-Ofen: "Deckelbildung", inhomogen geschmolzenes Material)
- kontinuerlicher, sehr kostengünstiger Schmelzprozess, kleines Reaktorvolumen (E-Ofen nur diskontinuerlich)
- keine Feuerfest-Probleme, da kein Schlackenkontakt mit dem Feuerfestmaterial in der Induktionszone stattfindet
- hoher Umwandlungswirkungsgrad von elektrischer Energie zu Wärme, sehr geringe Wärmeverluste im Vergleich zu Elektrodenofen
- geringst mögliche Abgasmengen, Sauggas bevorzugt inertes Edelgas wie Ar, aber auch Stickstoff oder auch reaktive Gase wie bevorzugt F₂ aber auch H₂O Cl₂, O₂ bzw. deren Gemische

Generell können Flüssigschlacken unterschiedlicher Provenienz eingesetzt werden und es können vor allen Dingen Nickeloxid, Eisenoxid, Phosphoroxid, Zinkoxid, Bleioxid, Manganoxid, Kupferoxid, Vanadiumoxid und Chromoxide in einfacher Weise reduziert werden. Bedingt durch die gute elektrische Leitfähigkeit von Graphit wird ein hohes Maß an Energieeffizienz erreicht, wobei durch das im Wesentlichen inerte Verhalten des Graphitkohlenstoffes auch bei hohen Temperaturen eine hohe Stabilität erhalten bleibt.

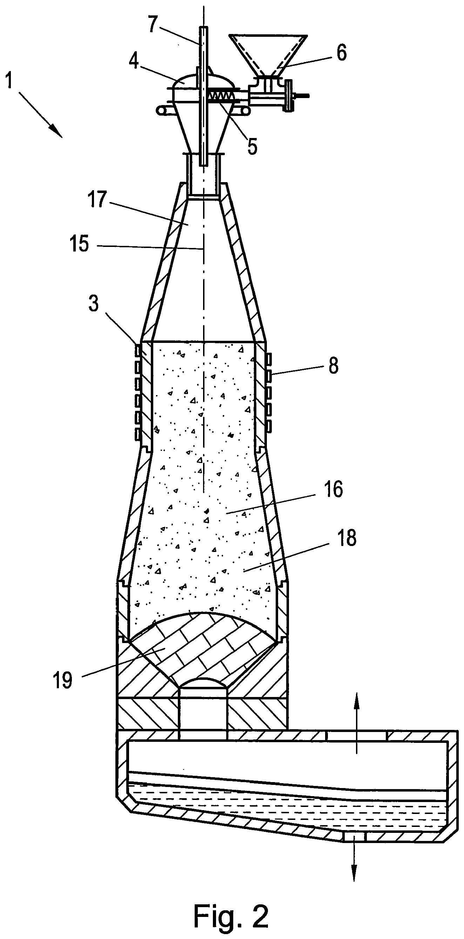

In Fig. 2 ist wiederum ein Reaktor 1 gezeigt, der eine Graphitschüttung 16 enthält. Anders als beim Reaktor aus Fig. 1 ist bei diesem Reaktor in einem axialen Bereich eine als Agglomerisationszone 18 ausgebildete Beruhigungszone vorgesehen, in welcher durch eine kontinuierliche Querschnittsvergrößerung des Reaktors in Richtung des Abstichendes eine Reduzierung der Gasgeschwindigkeit erzielt wird. Dadurch gelingt es, die zum Teil in Schwebe gehaltenen reduzierten Schmelzeteilchen durch eine Verminderung der auf diese einwirkenden Scherkräfte zu agglomerieren und aus der Gasphase zu entfernen. Mit 19 ist bei diesem Reaktor eine Feuerfest-Schüttung bezeichnet, die als Stützgewölbe für den darüber liegenden Graphitkörper bzw. die darüber liegende Graphitschüttung dient. Im Bereich der Feuerfestschüttung 19 ist der Querschnitt in Richtung des Abstichendes wiederum verringert, wodurch die bereits agglomerierten Schmelzeteilchen wiederum näher zueinander geführt werden und die Agglomerierung weiter begünstigt wird.

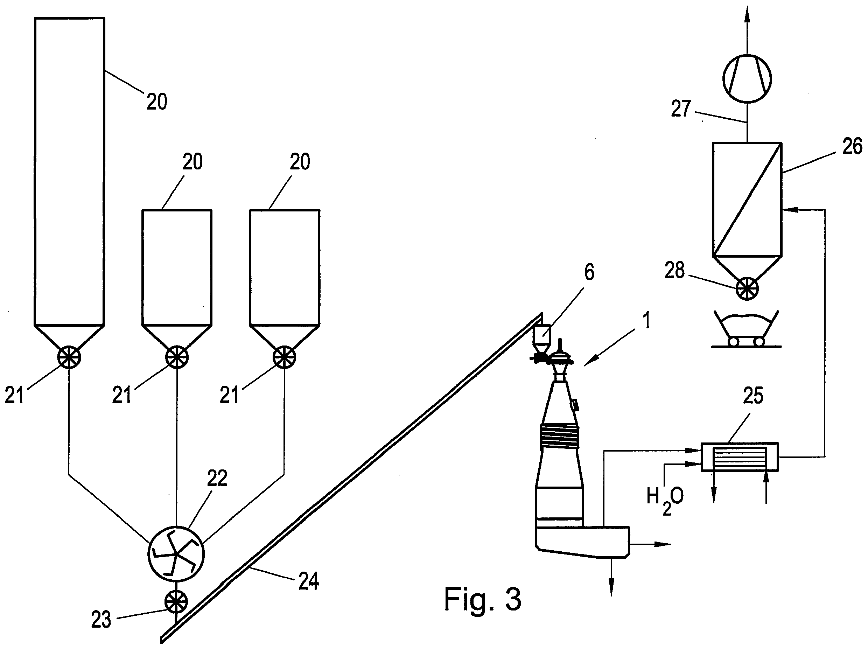

In der Darstellung nach Fig. 3 ist der Reaktor wiederum mit 1 bezeichnet, wobei mit 20 Vorratsbehälter bzw. Bunker bezeichnet sind, in welchen die zu reduzierenden Edukte vorgehalten werden. Über Zellradschleusen 21 können die verschiedenen Edukte kontrolliert einem Mischer 22 zugeführt werden, aus welchem das Eduktgemisch über eine weitere Zellradschleuse 23 und eine Fördereinrichtung 24 dem Aufgabetrichter 6 des Reaktors 1 zugeführt werden können. Am Abstichende des Reaktors werden Schlacken und Metallschmelze abgestochen, wobei das heiße Abgas unter Zufuhr von Wasser einem Wärmetauscher 25 zugeführt wird. Im Wärmetauscher bildet sich nach der Wassergasreaktion ein hochwertiges Reduktions- oder Brenngas aus Kohlenmonoxid und Wasserstoff. Eventuell noch vorhandener Zn-Dampf wird dabei durch Zugabe von Wasser-/Dampf unter Bildung von Wasserstoff in ZnO umgewandelt. Das resultierende Abgas wird einem Staubabscheider 26 zugeführt, in welchem sich eventuell noch vorhandener Sekundärstaub absetzt, sodass über eine Auslassleitung 27 ein reines Brenngas beispielsweise einem Klinkerofen oder Reduktionsofen zugeführt werden kann. Über eine Zellradschleuse 28 kann der Sekundärstaub aus dem Staubabscheider abgeführt werden.

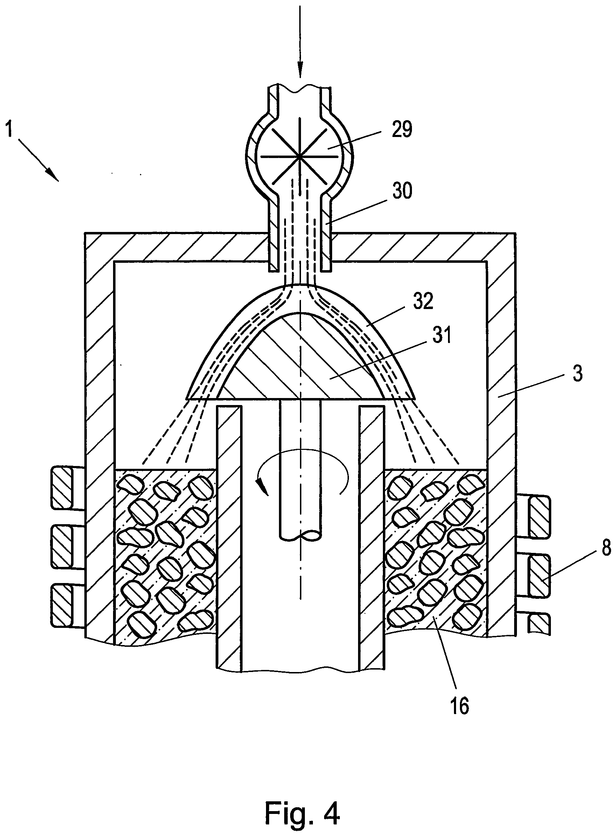

In Fig. 4 ist eine Zellradschleuse zur Aufgabe von Eduktstaub mit 29 bezeichnet, wobei der Eduktstaub gemeinsam mit Kohlenstoffträgern, welche fest oder gasförmig vorliegen können, dem Reaktor 1 zugeführt werden kann. Die Zellradschleuse 29 mündet in ein Zuführrohr 30, welches das Gehäuse 3 des Reaktors 1 durchsetzt. Das Zuführrohr 30 ist auf einen rotierbar gelagerten pilzförmigen Verteilerkörper 31 gerichtet, welcher in Fig. 4 im Schnitt gezeigt ist. Es ist erkennbar, dass am Verteilerkörper 31 Rillen 32 angeordnet sind, welche den zugeführten Eduktstaub mitnehmen und in welchen der Eduktstaub nach unten in Richtung der Graphitschüttung 16 gleitet. Abhängig von der Rotationsgeschwindigkeit des Verteilerkörpers 31 wird der Eduktstaub unterschiedlich weit von der Mitte des Reaktors 1 zur Peripherie des Reaktors 1 geschleudert, sodass das Auftragungsprofil der Edukte auf die Graphitschüttung 16 in einfacher Weise geregelt werden kann.

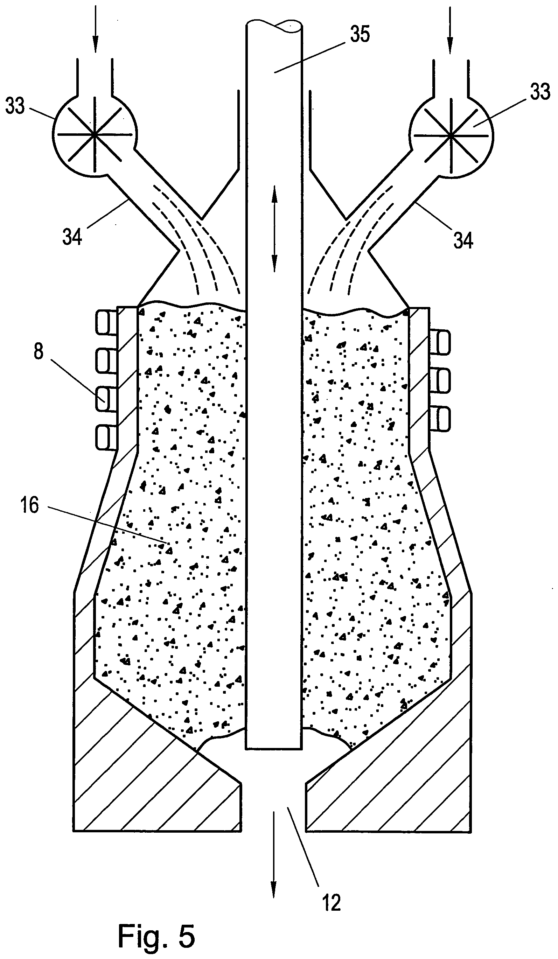

In Fig. 5 sind mit 33 zwei Zellradschleusen bezeichnet, durch welche es gelingt, relativ große Mengen an Eduktstaub auf die Graphitschüttung 16 aufzubringen. Mit 34 sind hierbei Fallrohre bezeichnet, die in geeignetem Winkel auf die Oberfläche der Graphitschüttung 16 gerichtet sind. Mit 35 ist ein Verdrängerkörper bezeichnet, der fakultativ beheizt sein kann, um eine optimale Temperaturverteilung in der Graphitschüttung 16 zu erzielen. Im Bereich der Öffnung 12 stützt der Verdrängerkörper 35 die Graphitschüttung und durch periodisches Oszillieren des Verdrängerkörpers 35 kann der Abstich optimiert werden, wobei gleichzeitig die Graphitschüttung 16 aufgelockert wird und ggf. verstopfte Bereiche der Graphitschüttung 16 wieder durchgängig werden.

## Patentansprüche

1. Verfahren zum Aufarbeiten bzw. Reduzieren von festen oder schmelzflüssigen Stoffen, wobei die festen oder schmelzflüssigen Stoffe auf einen zumindest teilweise induktiv erhitzten Graphitkörper aufgegeben werden, vom Kohlenstoff des Graphits verschiedene Reduktionsmittel eingebracht werden und die ablaufende reduzierte und/oder entgaste Schmelze gesammelt wird, wobei die Reduktionsmittel gemeinsam mit den festen oder schmelzflüssigen Einsatzstoffen eingebracht werden, **dadurch gekennzeichnet dass** als Reduktionsmittel Erdgas, Braunkohlestaub, Kohlenwasserstoffe, Wasserstoff, Kohlenmonoxid und/oder Ammoniak, gemeinsam mit Wasserdampf, Sauerstoff, CO₂ und/oder Halogenen bzw. Halogenwasserstoffen eingebracht werden und dass die festen oder schmelzflüssigen Stoffe und die vom Kohlenstoff des Graphits verschiedenen Reduktionsmittel in das Graphitbett eingesaugt werden.

2. Verfahren nach Anspruch 1, **dadurch gekennzeichnet, dass** der Graphitkörper als Graphitblock mit diesen durchsetzenden Kanälen oder Bohrungen ausgebildet ist.

3. Verfahren nach Anspruch 1 oder 2, **dadurch gekennzeichnet, dass** die aufzuarbeitenden festen oder schmelzflüssigen Stoffe von Shredderleichtfraktion gebildet sind.

4. Verfahren nach einem der Ansprüche 1 bis 3, **dadurch gekennzeichnet, dass** feste Reduktionsmittel mit Hilfe eines Trägergases eingebracht werden.

5. Verfahren nach Anspruch 4, **dadurch gekennzeichnet, dass** als Trägergas Stickstoff, Argon, CO, CO₂, O₂ oder Luft eingesetzt wird.

6. Verfahren nach einem der Ansprüche 1 bis 5, **dadurch gekennzeichnet, dass** das Redoxpotential des Graphitköpers durch Einblasen von Gasen geregelt wird und dass die Temperatur des Graphitkörpers durch Veränderung der aufgenommenen elektrischen Leistung und durch Einblasen von Gasen geregelt wird.

7. Verfahren nach einem der Ansprüche 1 bis 6, **dadurch gekennzeichnet, dass** für axial aufeinander folgende Abschnitte des Graphitkörpers die Temperatur und/oder die elektrische Leistungsaufnahme gesondert gemessen wird und dass die Temperatur und das Redox-Regime in gesonderten Abschnitten durch Einstellung der elektrischen Leistung und/oder der einzublasenden Gase und/oder Gasvolumina geregelt wird.

8. Verfahren nach einem der Ansprüche 1 bis 7, **dadurch gekennzeichnet, dass** Glaspartikel oder Glasschmelzen auf den glühenden Graphitkörper aufgegeben werden.

9. Verfahren nach einem der Ansprüche 1 bis 8, **dadurch gekennzeichnet, dass** Graphit in Form von Kugeln, Zylindern, Blöcken, pelletierten Presskörpern und/oder Elektrodenbruch verwendet wird.

10. Verfahren nach einem der Ansprüche 1 bis 9, **dadurch gekennzeichnet, dass** die Graphitkörper aus Graphit und einem Katalysatorpulver gebildet werden.

11. Verfahren nach einem der Ansprüche 1 bis 10, **dadurch gekennzeichnet, dass** die Graphitkörper zur Einstellung der elektrischen Leitfähigkeit mit geeigneten Salzen bzw. Metallen oder Keramik verpresst werden.

12. Verfahren nach einem der Ansprüche 1 bis 11, **dadurch gekennzeichnet, dass** die Graphitkörper hinsichtlich ihrer Mikroporosität kontrolliert ausgebildet werden.

13. Verfahren nach einem der Ansprüche 1 bis 12, **dadurch gekennzeichnet, dass** die induktive Beheizung unter Anlegen von Strom mit zwei unterschiedlichen Frequenzen vorgenommen wird.

14. Verfahren nach einem der Ansprüche 1 bis 13, **dadurch gekennzeichnet, dass** eine der zwei unterschiedlichen Frequenzen im Bereich von 3 bis 15 kHz liegt und die andere Frequenz unter 0,5 kHz liegt.

15. Verfahren nach einem der Ansprüche 1 bis 14, **dadurch gekennzeichnet, dass** der Graphitkörper als Schüttung eines Gemisches aus Graphit und inerten Füllkörpern eingebracht wird.

16. Verfahren nach Anspruch 15, **dadurch gekennzeichnet, dass** als inerte Füllkörper katalytisch wirksame CaO- oder MgO-Körper eingebracht werden.

17. Verfahren nach einem der Ansprüche 1 bis 16, **dadurch gekennzeichnet, dass** gemeinsam mit den Aufgabestoffen Stahlwerksstäube zur Abbindung von S aufgegeben werden.

## Claims

1. Method for processing and/or reducing solid or molten materials, the solid or molten materials being loaded onto an at least partially inductively heated graphite body, reducing agents other than the carbon of the graphite being introduced, and the reduced and/or degassed melt that runs off being collected, the reducing agents being introduced together with the solid or molten charge material, **characterised in that** natural gas, pulverised lignite, hydrocarbons, hydrogen, carbon monoxide and/or ammonia are introduced as the reducing agents, together with water vapour, oxygen, CO₂ and/or halogens or hydrogen halides, and **in that** the solid or molten materials and the reducing agents other than the carbon of the graphite are sucked into the graphite bed.

2. Method according to claim 1, **characterised in that** the graphite body is designed as a graphite block having channels or holes that pass therethrough.

3. Method according to either claim 1 or claim 2, **characterised in that** the solid or molten materials to be processed are formed by shredder light fraction.

4. Method according to any of claims 1 to 3, **characterised in that** solid reducing agents are introduced by means of a carrier gas.

5. Method according to claim 4, **characterised in that** nitrogen, argon, CO, CO₂, O₂ or air are used as carrier gases.

6. Method according to any of claims 1 to 5, **characterised in that** the redox potential of the graphite body is controlled by injecting gases, and **in that** the temperature of the graphite body is controlled by changing the electrical power input and by injecting gases.

7. Method according to any of claims 1 to 6, **characterised in that** the temperature and/or the electrical power input is measured separately for axially consecutive portions of the graphite body, and **in that** the temperature and the redox regime are controlled in separate portions by adjusting the electrical power and/or the gases to be injected and/or volumes of gas.

8. Method according to any of claims 1 to 7, **characterised in that** glass particles or glass melts are loaded onto the red-hot graphite body.

9. Method according to any of claims 1 to 8, **characterised in that** graphite in the form of spheres, cylinders, blocks, pelletised compacts and/or electrode debris is used.

10. Method according to any of claims 1 to 9, **characterised in that** the graphite bodies are formed from graphite and a catalyst powder.

11. Method according to any of claims 1 to 10, **characterised in that** the graphite body is compressed with suitable salts and/or metals or ceramics in order to adjust the electrical conductivity.

12. Method according to any of claims 1 to 11, **characterised in that** the graphite bodies are formed in a controlled manner with respect to the microporosity thereof.

13. Method according to any of claims 1 to 12, **characterised in that** the inductive heating is carried out by applying current at two different frequencies.

14. Method according to any of claims 1 to 13, **characterised in that** one of the two different frequencies is in the range of from 3 to 15 kHz, and the other frequency is below 0.5 kHz.

15. Method according to any of claims 1 to 14, **characterised in that** the graphite body is introduced as a filling consisting of a mixture of graphite and inert packing bodies.

16. Method according to claim 15, **characterised in that** catalytically acting CaO or MgO bodies are introduced as the inert packing bodies.

17. Method according to any of claims 1 to 16, **characterised in that** steelworks dust is loaded together with the loading materials in order to bind S.

## Revendications

1. Procédé de retraitement ou de réduction de substances solides ou en fusion, les substances solides ou en fusion étant appliquées sur un corps en graphite chauffé au moins en partie par induction, des agents réducteurs différents du carbone du graphite étant introduits et la masse fondue réduite qui s'écoule et/ou qui s'évapore étant recueillie, les agents réducteurs étant introduits en même temps que les substances solides ou en fusion à utiliser, **caractérisé en ce que** les agents réducteurs introduits sont du gaz naturel, de la poussière de lignite, des hydrocarbures, de l'hydrogène, du monoxyde de carbone et/ou de l'ammoniaque, avec de la vapeur d'eau, de l'oxygène, du CO₂ et/ou des halogènes ou des halogénures d'hydrogène, et **en ce que** les substances solides ou en fusion et les agents réducteurs différents du carbone du graphite sont aspirés dans le lit de graphite.

2. Procédé selon la revendication 1 **caractérisé en ce que** le corps en graphite se présente sous la forme d'un bloc de graphite traversé par ces canaux ou ces trous.

3. Procédé selon la revendication 1 ou 2 **caractérisé en ce que** les substances solides ou en fusion à retraiter sont constituées d'une fraction légère de déchiquetage.

4. Procédé selon l'une quelconque des revendications 1 à 3 **caractérisé en ce que** des agents réducteurs solides sont introduits à l'aide d'un gaz porteur.

5. Procédé selon la revendication 4 **caractérisé en ce que** le gaz porteur utilisé est l'azote, l'argon, le CO, le CO₂, le O₂ ou l'air.

6. Procédé selon l'une quelconque des revendications 1 à 5 **caractérisé en ce que** le potentiel d'oxydoréduction du corps en graphite est régulé en insufflant des gaz et **en ce que** la température du corps en graphite est régulée par la modification de la puissance électrique absorbée et par le soufflage de gaz.

7. Procédé selon l'une quelconque des revendications 1 à 6 **caractérisé en ce que** la température et/ou la consommation électrique sont mesurées séparément pour des sections successives sur le plan axial du corps en graphite et **en ce que** la température et le régime d'oxydoréduction sont régulés dans des sections séparées par l'ajustement de la puissance électrique et/ou des gaz à insuffler et/ou des volumes de gaz.

8. Procédé selon l'une quelconque des revendications 1 à 7 **caractérisé en ce que** des particules de verre ou des masses de verre fondues sont appliquées sur les corps en graphite incandescents.

9. Procédé selon l'une quelconque des revendications 1 à 8 **caractérisé en ce que** le graphite est utilisé sous forme de billes, de cylindres, de blocs, de corps comprimés en granulés et/ou de rupture d'électrodes.

10. Procédé selon l'une quelconque des revendications 1 à 9 **caractérisé en ce que** les corps en graphite sont constitués de graphite et d'une poudre de catalyseur.

11. Procédé selon l'une quelconque des revendications 1 à 10 **caractérisé en ce que** les corps en graphite sont comprimés avec des sels ou métaux appropriés ou de la céramique pour ajuster la conductibilité électrique.

12. Procédé selon l'une quelconque des revendications 1 à 11 **caractérisé en ce que** les corps en graphite sont formés de manière contrôlée du point du vue de leur microporosité.

13. Procédé selon l'une quelconque des revendications 1 à 12 **caractérisé en ce que** le chauffage par induction avec application de courant est réalisé à deux fréquences différentes.

14. Procédé selon l'une quelconque des revendications 1 à 13 **caractérisé en ce que** l'une des deux fréquences différentes se trouve dans la plage de 3 à 15 kHz et que l'autre fréquence est inférieure à 0,5 kHz.

15. Procédé selon l'une quelconque des revendications 1 à 14 **caractérisé en ce que** le corps en graphite est introduit en versant un mélange de graphite et d'éléments de remplissage inertes.

16. Procédé selon la revendication 15 **caractérisé en ce que** les éléments de remplissage inertes introduits sont des éléments CaO ou MgO à action catalytique.

17. Procédé selon l'une quelconque des revendications 1 à 16 **caractérisé en ce que** les substances selon l'invention permettent de renoncer aux poussières sidérurgiques pour lier S.
